**Europäisches Patentamt**

**European Patent Office**

**Office européen des brevets**

(19)

(11) Veröffentlichungsnummer: **0 004 313**
**A2**

(12) # EUROPÄISCHE PATENTANMELDUNG

(21) Anmeldenummer: 79100679.4

(22) Anmeldetag: 07.03.79

(51) Int. Cl.²: **C 08 L 23/12, C 08 L 23/08,**
**C 08 L 23/16, C 08 L 31/04**

(30) Priorität: 16.03.78 DE 2811548

(43) Veröffentlichungstag der Anmeldung: 03.10.79
**Patentblatt 79/20**

(71) Anmelder: **Bayer Aktiengesellschaft, Zentralbereich**
**Patente,Marken und Lizenzen Bayerwerk, D-5090**
**Leverkusen 1 (DE)**

(72) Erfinder: **Grigo, Ulrich, Dr., Steinstrasse 161, D-4150**
**Krefeld (DE)**
Erfinder: **Merten, Josef, Dr., An der Blankstrasse 33a,**
**D-4052 Korschenbroich 1 (DE)**
Erfinder: **Binsack, Rudolf, Dr., Bethelstrasse 4a,**
**D-4150 Krefeld (DE)**
Erfinder: **Tresper, Erhard, Dr., Dahler Dyk 154, D-4150**
**Krefeld (DE)**

(84) Benannte Vertragsstaaten: **BE DE FR GB IT NL SE**

(54) **Thermoplastische Mischungen aus Polypropylen mit Ethylen-Vinylacetat- und Ethylen-Propylen-Copolymerisaten.**

(57) Thermoplastische Mischungen, bestehend aus
A 2–40 Gew.% eines teilkristallinen Ethylen-Propylen-Copolymerisats bzw. Terpolymerisats mit einem Ethylengehalt von 70–90 Gew.% und einer endothermen Schmelzwärme von 6–18 cal/g,
B 30–93 Gew.% eines kristallinen Polypropylens,
C 5–30 Gew.% eines Copolymerisats aus Ethylen und Vinylacetat mit 20–70 Gew.% Vinylacetat.

EP 0 004 313 A2

BAYER AKTIENGESELLSCHAFT      5090 Leverkusen, Bayerwerk
Zentralbereich      Kb/AB
Patente, Marken und Lizenzen

Thermoplastische Mischungen aus Polypropylen mit Ethylen-
Vinylacetat- und Ethylen-Propylen-Copolymerisaten

Gegenstand der Erfindung sind thermoplastische Mischungen
aus einem teilkristallinen Ethylen-Propylen-Copolymerisat bzw. Terpolymerisat, einem kristallinen Polypropylen und einem Copolymerisat aus Ethylen und
Vinylacetat.

Polymergemische aus Ethylen-Propylen-Copolymerisat (EPM)
oder Ethylen-Propylen-Terpolymerisat (EPDM) mit Polypropylen sind bekannt (DAS 2 340 202, DOS 2 640 850,
DOS 2 641 518, DOS 2 644 644). In diesen Anmeldungen
werden Mischungen aus Polypropylen mit unvulkanisiertem
EP(D)M beschrieben. Die Verwendung von Vulkanisations- oder
Vernetzungsmitteln in diesen Gemischen ist beschrieben in
DAS 2 202 738, DAS 2 202 706, DOS 2 632 654, deutschem
Patent 1 271 980 und DAS 1 150 200.

Le A 18 763 - Europa

- 2 -

Das US-Patent 3 361 852 beschreibt ein ternäres
Polymerengemisch bestehend aus Polypropylen, einem
amorphen Ethylen-Propylen-Copolymerisat mit 5 - 75
Gew.-% Ethylen sowie einem Copolymerisat von Ethylen
mit Vinylacetat. Im japanischen Patent 51 145-553
ist eine Mischung aus Polypropylen, Ethylen-Propylen-
Copolymerisat und Ethylen-Vinylacetat-Copolymerisat
beschrieben, die während der Verarbeitung vernetzt
wird (Gelgehalt in Tetralin bei 135°C: 30 - 80 %).

Tertiäre Mischungen aus Polypropylen, Ethylen-
Vinylacetat-Copolymerisat und statistischem amorphen
EPM bzw. EPDM weisen zwar eine hohe Elastizität auf,
jedoch haben sie den Nachteil eines deutlichen Abfalls an Wärmeformbeständigkeit (Vicat-Temperatur)
und Härte (US-Pat. 3 361 852). Die ternären  erfindungsgemäßen Mischungen zeichnen sich demgegenüber
dadurch aus, daß sie eine erhebliche Verbesserung
der Wärmeformbeständigkeit und Härte aufweisen, ohne
daß die Vorteile der hohen Elastizität, speziell der
bleibenden Dehnung, verlorengehen.

Binäre Mischungen aus Polypropylen und teilkristallinem
Sequenz-EPM bzw. EPDM zeichnen sich zwar durch eine
hohe Härte und eine hohe Wärmeformbeständigkeit aus,
haben aber den Nachteil einer geringen Elastizität,
vor allem einer geringen bleibenden Dehnung. Die
ternären erfindungsgemäßen Mischungen haben gegenüber den binären Mischungen mit Sequenz-EPM bzw. EPDM

Le A 18 763

- 3 -

den Vorteil, daß sie eine deutliche Verbesserung der elastischen Eigenschaften, speziell der bleibenden Dehnung, bewirken. Binäre Mischungen aus Polypropylen und statistischem amorphen EPM bzw. EPDM weisen zwar eine gute Elastizität auf, jedoch sind Härte und Wärmeformbeständigkeit gegenüber den erfindungsgemäßen Mischungen deutlich abgesenkt.

Wie gefunden wurde, werden thermoplastische Mischungen mit den beschriebenen Vorteilen erhalten bei Verwendung von teilkristallinen Ethylen-Propylen- bzw. Ethylen-Propylen-Dien-Copolymerisaten. Erfindungsgemäß werden dafür Ethylen-Propylen- bzw. Ethylen-Propylen-Dien-Copolymerisate mit einem Ethylenanteil von etwa 70 - 90 Gew.-% eingesetzt, die sogenannte Ethylen-Sequenzen enthalten (G. Kerrutt, Kautschuk u. Gummi, Kunststoffe 26, 341 (1973). Die Schmelzwärmen der erfindungsgemäß verwendeten Sequenz-EPM bzw. -EPDM liegen zwischen 6 - 18 cal/g, vorzugsweise 8 - 15 cal/g. Die Einfriertemperatur (Tg) beträgt -30 bis -45$^{o}$C, die Schmelztemperatur 40 - 60$^{o}$C und die Mooney-Viskosität im allgemeinen 20 - 90 (ML$_{1-4}$, 100$^{o}$C. Weiterhin zeichnen sich die Sequenz-EPM und -EPDM durch eine hohe Rohfestigkeit und einen sehr geringen Gelanteil ($\geq$ 5 %) aus.

Gegenstand der Erfindung sind thermoplastische Mischungen bestehend aus

Le A 18 763

- 4 -

A) 2 - 40 Gew.-% eines teilkristallinen Ethylen-Propylen-Copolymerisats - bzw. Terpolymerisats mit
einem Ethylengehalt von 70 - 90 Gew.-% und einer
endothermen Schmelzwärme von 6 - 18 cal/g.

B) 30 - 93 Gew.-% eines kristallinen Polypropylens,

C) 5 - 30 Gew.-% eines Copolymerisats aus Ethylen und
Vinylacetat.

Die erfindungsgemäß verwendeten Ethylen-Propylen-
Copolymerisate haben 0 - 2 Doppelbindungen/1000 C-Atome,
während die Ethylen-Propylen-Dien-Terpolymerisate
2 - 20 Doppelbindungen/1000 C-Atome aufweisen können.
Das Ethylen macht etwa 70 - 90 Gew.-% des Polymerisats,
das Propylen etwa 10 - 30 Gew.-% und das Dien 0,2 -
10 Gew.-% aus, bezogen jeweils auf das Gesamtgewicht
des EPDM-Polymerisats. Vorzugsweise beträgt der
Ethylengehalt etwa 75 - 85 Gew.-%, der Propylengehalt etwa 10 - 25 Gew.-% und der Diengehalt 0,5 - 8 Gew.-%.
Als Beispiele geeigneter Diene seien genannt: konjugierte Diene, z.B. Isopren und Butadien, und nicht
konjugierte Diene mit 5 - 25 C-Atomen, z.B. 1,4-
Pentadien, 1,4-Hexadien, 1,5-Hexadien, 2,5-Dimethyl-
1,5-hexadien und 1,4-Octadien; cyclische Diene, z.B.
Cyclopentadien, Cyclohexadien, Cyclooctadien und
Dicyclopentadien; Alkenylnorbornene, z.B. 5-Ethyliden-
2-norbornen, 5-Butyliden-2-norbornen, 2-Methallyl-
5-norbornen, 2-Isopropenyl-5-norbornen und Tricyclodiene,
z.B. 3-Methyl-tricyclo-(5,2, 1,0, 2,6)-3,8-decadien.
Bevorzugte Diene sind Ethylidennorbornen oder Dicyclopentadien.

Le A 18 763

- 5 -

Die EPM- bzw. EPDM-Copolymeren können nach bekannten
Verfahren, z.B. durch Polymerisation in Suspension
oder Lösung hergestellt werden.

Das verwendete Polypropylen hat eine Dichte von ca.
0,90 - 0,92 g/cm$^3$ und einen Schmelzindex (IMI) von 5 -
20 g/10 min, gemessen bei 230$^{\circ}$C unter einer Belastung
von 2,16 kg. Bevorzugt werden Polypropylene mit
Schmelzindices zwischen 5 und 15 g/10 min. Der isotaktische Anteil im erfindungsgemäß verwendeten Polypropylen sollte über 90 % liegen, da sonst merkliche
Einbußen an Wärmeformbeständigkeit (Vicat VST/A)
und Kugeldruckhärte auftreten können. Der isotaktische
Anteil kann z.B. NMR-spektroskopisch an einer Lösung
des Polypropylens in Trichlorbenzol bestimmt werden.
Die Polypropylene sind im Handel erhältlich und
können nach bekannten Polymerisationsverfahren hergestellt werden.

Die verwendeten Ethylen-Vinylacetat-Copolymerisate haben
eine Mooney-Viskosität von 10 - 50 (ML$_{4+1}$, 100$^{\circ}$C),
eine Dichte von 0,93 - 1,2 g/cm$^3$ und einen Gelanteil
> 5 % (bestimmt in Toluol). Der Vinylacetat-Gehalt
im Copolymeren beträgt 20 - 70 Gew.-%, vorzugsweise
25 - 60 Gew.-% und besonders bevorzugt 30 - 50 Gew.-%.
Die Vinylacetat-Einheiten im Copolymerisat sind im
allgemeinen statistisch verteilt. Die Schmelzwärme
der Copolymerisate sollte unter 15 cal/g liegen
(Tabelle 1).

0004313

- 6 -

Die erfindungsgemäßen Produkte sind physikalische Gemische aus EPM- bzw. EPDM-Copolymerisat, isotaktischem Polypropylen und Ethylen-Vinylacetat-Copolymerisat. Sie werden durch physikalisches Mischen der drei Polymerkomponenten unter Einwirkung von Wärme und Scherkräften hergestellt. Vulkanisations- oder Vernetzungsmittel werden nicht verwendet.

Die Polymergemische gemäß der Erfindung sind bei Temperaturen oberhalb von 130$^O$C, vorzugsweise im Bereich von 130 bis ca. 210$^O$C thermoplastisch verformbar und können ohne merklichen Abbau erneut verformt werden. Trotzdem sind die Polymergemische bei Raumtemperatur flexibel und elastisch. Die Polymergemische können leicht nach den üblichen Verfahren, beispielsweise in Zweiwalzenmischern, Extrudern und Banbury-Mischern unter Anwendung üblicher Misch- und Zugabeverfahren verarbeitet werden.

Als Beispiele geeigneter Mischungszusätze seien genannt: Oxide von Zink, Calcium und Magnesium; Fettsäuren, z.B. Stearinsäure und Laurinsäure, und ihre Salze, z.B. Zink- und Kupferstearat; Füllstoffe, z.B. Ruße oder Talkum, Calcium- und Magnesiumcarbonat, Calcium- und Bariumsulfat, Aluminiumsilicat und Asbest; Weichmacher und Streckmittel, z.B. organische Diester wie Diisobutyl-, Diisooctyl-, Diisodecyl- und Dibenzyloleat, -stearat, -sebacat, -azelat und -phthalat; aromatische, naphthenische und paraffinische Öle; Antioxidantien, Ozon-Schutzmittel und

Le A 18 763

- 7 -

Licht-Stabilisatoren, z.B. sterisch gehinderte Phenole,
wie 2,6-Di-tert.-butyl-p-kresol oder Tetratris/methylen-
3-(3',5'-di-tert.-butyl-4'-hydroxyphenyl)-propionat/-
methan, sterisch gehinderte Amine wie 2,2,6,6-Tetramethylpiperidin oder 2,2,6,6-Tetramethyl-4-hydroxypiperidin-4-phosphonsäure; Derivate der phosphorigen
Säure wie Trisnonylphosphit; Amine wie Di-ß-naphthylp-phenylendiamin, Phenyl-ß-naphthylamin; Di-stearylthiodipropionat, Dilaurylthiodiproponiat. Bewährt
haben sich auch Kombinationen der erwähnten Stabilisatoren. Infrage kommen weitere Mischungszusätze wie
Pigmente, Klebrigmacher, flammwidrigmachende Mittel
und Fungizide.

Diese Bestandteile werden in den bekannten, in der
Thermoplast-Technologie üblichen Mengen verwendet.

Die thermoplastischen Polymergemische gemäß der Erfindung eignen sich beispielsweise zur Herstellung von
Autoteilen wie Stoßstangen, Armaturenbrettern und Auto-
Innenverkleidungen, weiterhin für Draht- und Kabelisolierungen, und die Herstellung von Matten und
Formteilen.

- 8 -

## Beispiele

Die polymeren Komponenten der Gemische wurden zusammen mit den gegebenenfalls verwendeten Mischungszusätzen auf einem Banbury-Mischer gemischt. Die Knetdauer betrug in allen Fällen 5 Minuten. Die Massetemperaturen lagen zwischen 130 - 220$^{\circ}$C. Das Knetprodukt wurde auf einer Walze (Walzentemperatur ca. 100$^{\circ}$C) zum Fell ausgewalzt und anschließend granuliert. Das Granulat wurde auf einer Spritzgußmaschine bei 220$^{\circ}$C zu Probekörpern nach DIN 53 504 verarbeitet.

Das Ethylen/Propylen-Verhältnis im EPM bzw. EPDM wird NMR-spektroskopisch (in Trichlorbenzol) bestimmt, während die Schmelzwärme unter üblichen Verarbeitungsbedingungen über DSC (Differential-Scanning-calorimetry) und die Schmelztemperatur über DTA-Messungen (Differential-Thermo-Analyse) bei einer Heizrate von 20$^{\circ}$C/min ermittelt worden sind (s.Tab. 1).

Die Zusammensetzung der Beispiele und Vergleichsbeispiele sowie die Prüfergebnisse hinsichtlich Wärmeformbeständigkeit, Härte und Elastizität, gemessen als bleibende Dehnung, sind in Tabelle 2 zusammengefaßt.

Die Meßergebnisse zeigen, daß in den Vergleichsbeispielen I und II, die Polypropylen, statistisches amorphes EPM und Ethylen-Vinylacetat-Copolymerisat

Le A 18 763

mit einem Vinylacetatgehalt von 45 bzw. 33 Gew.-% (EVA 45 bzw. EVA 33) enthalten, die Elastizität (bleibende Dehnung) zwar gleich gut wie in den erfindungsgemäßen Beispielen 1 - 4 ist, jedoch Kugeldruckhärte und Wärmeformbeständigkeit deutlich gegenüber den erfindungsgemäßen Beispielen abgesenkt sind. Auch binäre Abmischungen aus Polypropylen und teilkristallinem Sequenz -EPM (Vergleichsbeispiel III) haben gegenüber den ternären erfindungsgemäßen Beispielen den Nachteil einer zu geringen Elastizität, gemessen als bleibende Dehnung, während binäre Abmischungen mit Polypropylen und amorphem EPM (Vergleichsbeispiel IV) zwar eine ausreichende Elastizität, jedoch zu geringe Härte und Wärmeformbeständigkeit gegenüber den erfindungsgemäßen Beispielen 1 - 4 aufweisen.

Le A 18 763

**T a b e l l e  1:**  Physikalische Daten der eingesetzten Polymeren

| | Dichte g/cm$^3$ | Mooney-Visk. ML-4 (100°C) | IMI 230°C/2,16 g/ 10 min. | Ethylen-Gehalt Gew.-% | Ter-Komp. | Schmelzwärme $\Delta$ H (cal/g) |
|---|---|---|---|---|---|---|
| Sequ.-EPM | 0,86 | 85 | – | 77 | – | 13,4 |
| Sequ.-EPDM | 0,86 | 85 | – | 77 | EN[++] | 10,2 |
| statist. EPM | 0,86 | 45 | – | 48 | – | – |
| PP[+] | 0,91 | – | 8,2 | – | – | 22 |
| EVA 45 | 0,98 | 20 $\pm$ 4 | – | 45 | – | 1–2 |
| EVA 33 | 0,96 | 14 $\pm$ 4 | – | 33 | – | 8 |

+) isotakt. Anteil: 96 %

++) EN = Ethyliden-Norbornen

T a b e l l e    2    Versuchsergebnisse

| Zusammensetzung | Maß-einh. | Prüfvor-schrift DIN | Beisp. 1 | Beisp. 2 | Beisp. 3 | Beisp. 4 | Vgl. Beisp. I | Vgl. Beisp. II | Vgl. Beisp. III | Vgl.Beisp. IV |
|---|---|---|---|---|---|---|---|---|---|---|
| PP | | | 60 Tle | 60 Tle | 60 Tle | 60 Tle | 60 Tle | 60 Tle | 60 Tle | 60 Tle |
| Sequ.-EPM | | | 30 Tle | - | 30 Tle | - | - | - | 40 Tle | - |
| Sequ.-EPDM | | | - | 30 Tle | - | 30 Tle | - | - | - | - |
| statist. EPM | | | - | - | - | - | 30 Tle | 30 Tle | - | 40 Tle |
| EVA 45 | | | 10 Tle | 10 Tle | - | - | 10 Tle | - | - | - |
| EVA 33 | | | - | - | 10 Tle | 10 Tle | - | 10 Tle | - | - |
| Kugeldruckhärte $H_{30}$ | MPa | 53 456 | 20,3 | 19,4 | 21,2 | 20,8 | 14,4 | 15,3 | 22 | 15,0 |
| Vicat-Temp. (VST/A) | °C | 53 460 | 117 | 116 | 118 | 118 | 109 | 111 | 119 | 112 |
| bleibende Dehnung[+] | % | [+] | 69,2 | 67,6 | 71,5 | 69,4 | 67,2 | 68,7 | 82,3 | 67,3 |

[+]) bestimmt beim Zugversuch nach DIN 53 455

**Patentansprüche**

1. Thermoplastische Mischungen bestehend aus

   A) 2 - 40 Gew.-% eines teilkristallinen Ethylen-
      Propylen-Copolymerisats- bzw. Terpolymerisats
      mit einem Ethylengehalt von 70 - 90 Gew.-% und
      einer endothermen Schmelzwärme von 6 - 18 cal/g,

   B) 30 - 93 Gew.-% eines kristallinen Polypropylens,

   C) 5 - 30 Gew.-% eines Copolymerisats aus Ethylen
      und Vinylacetat mit 20 - 70 Gew.-% Vinylacetat.

2. Thermoplastische Mischungen nach Anspruch 1, bestehend
   aus:

   A) 70 - 93 Gew.-% Polypropylen,
   B) 2 - 25 Gew.-% Ethylen-Propylen-Copolymerisat bzw.
      Ethylen-Propylen-Terpolymerisat,

   C) 5 - 28 Gew.-% Ethylen-Vinylacetat-Copolymerisat

3. Thermoplastische Mischungen nach Anspruch 1 und 2,
   dadurch gekennzeichnet, daß das Ethylen-Propylen-Copolymerisat bzw. Terpolymerisat 75 - 85 Gew.-% Ethylen
   und eine Schmelzwärme von 8 - 15 cal/g besitzt.

4. Thermoplastische Mischungen nach Anspruch 1 bis 3,
   dadurch gekennzeichnet, daß das Ethylen-Propylen-
   Terpolymerisat 0,2 - 10 Gew.-% nicht konjugiertes Dien
   enthält.

Le A 18 763

5. Thermoplastische Mischungen nach Anspruch 1 bis 4,
   dadurch gekennzeichnet, daß das verwendete Polypropylen einen isotaktischen Anteil von mehr als
   90 Gew.-% und einen Schmelzindex (IMI) von 5 - 20 g/
   10 Min. bei 230°C und einer Belastung von 5 kg besitzt.

6. Thermoplastische Mischungen nach Anspruch 1 bis 5,
   dadurch gekennzeichnet, daß das Ethylen-Vinylacetat-Copolymerisat einen Vinylacetat-Gehalt von
   25 - 60 Gew.-% besitzt.

Le A 18 763